**Europäisches Patentamt**

**European Patent Office**

**Office européen des brevets**

(19)

(11) Veröffentlichungsnummer : **0 040 818**
**B1**

(12) **EUROPÄISCHE PATENTSCHRIFT**

(45) Veröffentlichungstag der Patentschrift :
**17.10.84**

(21) Anmeldenummer : **81103897.5**

(22) Anmeldetag : **20.05.81**

(51) Int. Cl.³ : **G 01 S   7/02**, G 01 S 13/56,
G 01 S 13/58

(54) **Dopplerradargerät mit zwei Hohlraumresonatoren.**

(30) Priorität : **23.05.80 DE 3019887**

(43) Veröffentlichungstag der Anmeldung :
**02.12.81 Patentblatt 81/48**

(45) Bekanntmachung des Hinweises auf die Patenterteilung : **17.10.84 Patentblatt 84/42**

(84) Benannte Vertragsstaaten :
**FR GB IT**

(56) Entgegenhaltungen :
**GB-A- 1 573 300**
**US-A- 4 157 549**
**WIRELESS WORLD, Band 83, Nr. 1499, Juli 1977**
**Haywards Heath, GB M.W. HOSKING: "Microwave**
**Intruder Alarm", Seiten 36-39**

(73) Patentinhaber : **Siemens Aktiengesellschaft**
**Berlin und München Wittelsbacherplatz 2**
**D-8000 München 2 (DE)**

(72) Erfinder : **Müller, Jörg, Dr.-Ing.**
**Herzog-Tassilo-Ring 44**
**D-8011 Zorneding (DE)**

## Beschreibung

Die Erfindung betrifft ein Dopplerradargerät, bestehend aus zwei, insbesondere in etwa gleiche Abmessungen aufweisenden, im wesentlichen quaderförmigen Hohlraumresonatoren, die mittels einer beiden Hohlraumresonatoren gemeinsamen Seitenwand, die eine Koppelöffnung enthält, miteinander verbunden sind, bei dem im der erste Hohlraumresonator bis auf eine Koppelöffnung geschlossen und der zweite Hohlraumresonator an der zum zu messenden Objekt hin gerichteten Stirnseite geöffnet ausgeführt ist.

Ein entsprechendes, zur Geschwindigkeitsmessung oder Bewegungserfassung geeignetes Dopplerradargerät ist aus M.W. Hosking, Microwave intruder alarm, Wireless World, July 1977, S. 36-39 bekannt. Es besteht aus zwei im wesentlichen gleiche Höhe, Breite und Länge aufweisenden, quaderförmigen Hohlraumresonatoren, die an einer ihrer Längsseiten starr miteinander verbunden sind und deren zum zu messenden Objekt hin gerichtete Stirnseiten offen ausgeführt sind. Im ersten Hohlraumresonator ist zur Schwingungserregung eine Gunndiode angeordnet, während im zweiten Hohlraumresonator zur Frequenzmischung eine Schottky-Diode angebracht ist. Die aufgrund der offenen Stirnseite des ersten Hohlraumresonators abgestrahlten Schwingungen werden von einem bewegten Objekt infolge des Dopplereffektes mit abweichender Frequenz reflektiert. Mittels der im zweiten Hohlraumresonator angeordneten Schottky-Diode wird durch Überlagerung der Sendefrequenz mit der Rückstrahlfrequenz die Dopplerfrequenz gewonnen und einer weiteren Auswertung zugeleitet.

Es hat sich nun gezeigt, daß ein entsprechend ausgeführtes Dopplerradargerät eine relativ geringe Empfindlichkeit aufweist. Dies liegt unter anderem daran, daß nur ein sehr geringer Teil der abgestrahlten Senderleistung vom ersten Hohlraumresonator in den zweiten Hohlraumresonator eingekoppelt wird. Außerdem ist die Oberwellenunterdrückung problematisch.

Aus der US-PS 4 157 549 ist ein Dopplerradargerät bekannt, das aus zwei im wesentlichen quaderförmigen Hohlraumresonatoren besteht, die mittels einer beiden Hohlraumresonatoren gemeinsamen Wand miteinander verbunden sind, bei dem in einem mit offener Stirnseite ausgeführten Hohlraumresonator eine Oszillatordiode angebracht ist, während in einem zweiten Hohlraumresonator, der bis auf eine Koppelöffung in der gemeinsamen Verbindungswand geschlossen ausgeführt ist, eine Empfangsdiode angebracht ist. Aus der genannten Druckschrift ist es ferner bekannt, auch den die Empfangsdiode enthaltenden Hohlraumresonator offen auszuführen. Da bei einem solchen Dopplerradargerät die Leistung direkt abgestrahlt wird, ist diese in beiden Fällen mit einem hohen Oberwellenanteil behaftet und es lassen sich unterschiedliche Sendeleistungen nur schwer oder nicht einstellen. Außerdem weist ein solches Gerät bei geschlossenem Empfangs-Hohlraumresonator eine geringe Empfindlichkeit auf, da die empfangene Leistung über die offene Stirnseite des Sende-Hohlraumresonators aufgenommen wird und nur ein Teil davon über die Öffnung in der gemeinsamen Verbindungswand zur Empfangsdiode gelangt.

Aufgabe der Erfindung ist es, hier Abhilfe zu schaffen und ein Dopplerradargerät vorzusehen, das eine hohe Empfindlichkeit aufweist und oberwellenarm ist. Das Dopplerradargerät soll auch bei unterschiedlichen Sendeleistungen wirtschaftlich zu fertigen sein.

Diese Aufgabe wird erfindungsgemäß bei einem Dopplerradargerät aus zwei Hohlraumresonatoren, die mittels einer beiden Hohlraumresonatoren gemeinsamen Wand, die eine Koppelöffnung enthält, miteinander verbunden sind, bei dem der erste Hohlraumresonator bis auf eine Koppelöffnung geschlossen und der zweite Hohlraumresonator an der zum zu messenden Objekt hin gerichteten Stirnseite geöffnet ausgeführt ist, und bei dem im einen Hohlraumresonator eine Oszillatordiode und im anderen eine die Sende- und Empfangswelle mischende Empfangsdiode angeordnet sind, dadurch gelöst, daß im ersten Hohlraumresonator die Oszillatordiode und im zweiten Hohlraumresonator die Empfangsdiode angeordnet ist und daß die Koppelöffnung von der vom zu messenden Objekt weggerichteten Stirnseite des ersten Hohlraumresonators und die Empfangsdiode von der vom Objekt weggerichteten Stirnseite des zweiten Resonators den gleichen Abstand haben. Bei dieser Anordnung werden die im ersten Hohlraumresonator erzeugten Schwingungen nicht direkt in Richtung des zu erfassenden Objektes abgestrahlt, sondern durch die in der Verbindungswand angebrachte Koppelöffnung in den zweiten Hohlraumresonator eingekoppelt und durch die geöffnete Stirnseite des zweiten Hohlraumresonators abgestrahlt. Aufgrund des hohen Anteils der abgestrahlten Leistung, die auf die im zweiten Hohlraumresonator angeordnete Empfangsdiode wirkt, wird deren Kennlinie gut durchgesteuert und ein im Vergleich zum Stand der Technik erheblich größeres Ausgangssignal erreicht. Je nach Größe der Koppelöffnung in der Verbindungswand ist ferner die abgestrahlte Leistung einstellbar.

Zur Erhöhung der in den zweiten Hohlraumresonator eingekoppelten Leistung ist es vorteilhaft, daß die Dicke der Verbindungswand im Bereich der Koppelöffnung vermindert ist, insbesondere auf 0,3 bis 1,5 mm, und daß im Bereich der Koppelöffnung in der Verbindungswand eine zusätzliche Ausbohrung angeordnet ist, die eine größere Querschnittsfläche als die Koppelöffnung aufweist.

Zur Vermeidung von unerwünschten Oberwellen ist es vorteilhaft, daß die Koppelöffnung in einer Entfernung von (2 n + 1) · λ/4, insbesondere λ/4 von der vom zu messenden Objekt weggerichteten Stirnseite des zweiten Hohlraumresonators angebracht ist, wobei λ die Wellenlänge der im ersten Hohlraumresonator erregten Schwingungen und n eine von O an laufende, ganzzahlige Zahl bedeutet.

Es liegt im Rahmen der Erfindung, daß der Durchmesser der Koppelöffnung im Bereich zwischen ganzer und halber Höhe der Verbindungswand gewählt ist.

In einer Weiterbildung der Erfindung ist zum Erzielen einer geringen Baulänge vorgesehen, daß mindestens im ersten Hohlraumresonator ein dielektrischer Einsatz aus einem eine größere Dielektrizitätskonstante als Luft aufweisenden Material angeordnet ist, daß der dielektrische Einsatz in etwa quaderförmig ist und eine Rechteckfläche des Quaders in ihren Abmessungen der Stirnfläche des ersten Hohlraumresonators entspricht, daß der dielektrische Einsatz an der zum zu messenden Objekt hin gewandten Stirnseite des ersten Hohlraumresonators angeordnet ist und daß der dielektrische Einsatz aus Kunststoff, insbesondere Polyvinylchlorid, oder Keramik besteht.

Es liegt im Rahmen der Erfindung, daß zur Regulierung der Sendeleistung im zweiten Hohlraumresonator ein insbesondere in der Resonatormitte angebrachter Metallstift vorgesehen ist, dessen in den zweiten Hohlraumresonator eintauchende Länge variabel ist, daß der Metallstift von der vom zu messenden Objekt weg gerichteten Stirnseite des zweiten Hohlraumresonators in einer Entfernung von λ/2 angebracht wird und daß die in den zweiten Hohlraumresonator eintauchende Länge des Metallstiftes maximal der halben Höhe des Hohlraumresonators entspricht.

Zur rationellen Fertigung ist es vorteilhaft, daß der erste Hohlraumresonator an der zum zu messenden Objekt hin gerichteten Stirnseite mittels eines mit dem Hohlraumresonator kaltverschweißbaren Deckels geschlossen ist.

Vorzugsweise wird das erfindungsgemäße Dopplerradargerät als Näherungsschalter oder Geschwindigkeitsmesser verwendet.

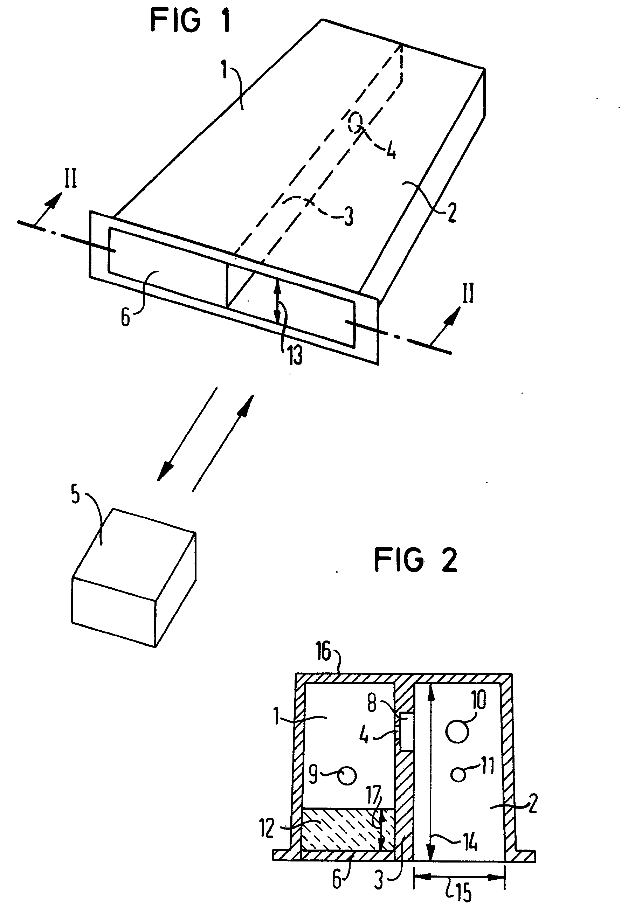

Die Erfindung wird im folgenden anhand zweier Figuren näher erläutert. Die Figur 1 zeigt ein Ausführungsbeispiel für ein erfindungsgemäßes Dopplerradargerat. Die Figur 2 zeigt einen Schnitt quer durch das in der Figur 1 gezeigte Ausführungsbeispiel entlang der Linie II-II.

Das in der Figur 1 gezeigte Ausführungsbeispiel besteht aus einen ersten Hohlraumresonator 1, in dem eine in der Figur aus Gründen der Übersichtlichkeit nicht dargestellte Oszillatordiode, beispielsweise eine Gunn-Diode, angeordnet ist, und einem zweiten Hohlraumresonator 2, in dem sich eine ebenfalls in der Figur nicht dargestellte Empfangsdiode, beispielsweise eine Schottky-Diode, befindet. Beide Hohlraumresonatoren 1 und 2 sind durch eine Verbindungswand 3, in der sich eine beispielsweise kreisförmige Koppelöffnung 4 befindet, getrennt. Diejenige Stirnseite des ersten Hohraumresonators 1, die zum zu messenden, in der Regel bewegten Objekt 5 hin weist, ist beispielsweise mittels eines Deckels 6 verschlossen. Die entsprechende Stirnseite des zweiten Hohlraumresonators 2 ist offen ausgeführt. Die Resonatoren 1 und 2 können die gleichen Abmessungen aufweisen und sind im gezeigten Biespiel quaderförmig ausgeführt, wobei die zum Objekt 5 hin gerichteten Stirnseiten einen etwas größeren Querschnitt als die gegenüberliegenden Stirnseiten aufweisen können.

Die Figur 2 zeigt einen waagerechten Schnitt durch die Mitte des in der Figur 1 gezeigten Ausführungsbeispiels. Es kommen die gleichen Bezugszeichen wie in der Figur 1 zur Anwendung. Die Oszillatordiode 9 ist im ersten Hohlraumresonator 1 und die Empfängerdiode 10 im zweiten Hohlraumresonator 2 angebracht. Eine Ausbohrung 8 im Bereich der Koppelöffnung 4 in der Verbindungswand 3 dient der besseren Leistungsübertragung zwischen beiden Resonatoren. Eine Feinregulierung der Sendeleistung ist mittels eines Metallstiftes 11, dessen Achse senkrecht zur Zeichenebene der Figur 2 steht und der so am zweiten Hohlraumresonator 2 angebracht ist, daß seine in den Resonator 2 eintauchende Länge variabel ist, möglich. Der Metallstift 11 kann beispielsweise als Schraube ausgeführt sein.

Mittels eines dielektrischen Einsatzes 12 kann die Baulänge des Dopplerradars verkürzt werden. Als Material für den Einsatz 12 eignen sich beliebige Dielektrika mit einer höheren Dielektrizitätskonstante als Luft, beispielsweise Kunststoffe wie Polyvinylchlorid. Bei Verwendung von dielektrischen Einsätzen 12 mit unterschiedlicher Dielektrizitätskonstante und/oder unterschiedlicher mechanischer Länge kann der Hohlraumresonator 1 in einfacher Weise und ohne großen Umrüstungsaufwand bei verschiedenen Frequenzen betrieben werden. Bei Verwendung eines erfindungsgemäßen ersten Hohlraumresonators 1, der geschlossen ausgeführt ist, ist der dielektrische Einsatz 12 in einfacher Weise durch Öffnen des Deckels 6 einsetz- bzw. auswechselbar. Besonders vorteilhaft ist es, den dielektrischen Einsatz so zu wählen, daß eine temperaturbedingte Frequenzänderung des Resonators 1 kompensiert wird, d. h., daß die elektrische Länge des Einsatzes 12 sich bei Temperaturänderungen so verkürzt, wie sich die elektrische Länge des Resonators 1 verlängert. Ein geeignetes keramisches Material ist beispielsweise $(Zr_xTi_ySn_z) O_4$, wobei die Summe der drei Indizes x, y und z zwei ist.

Die abgestrahle Leistung des Dopplerradarsgerätes ist durch Wahl des Durchmessers der Koppelöffnung 4 grob einstellbar. So ist die abgestrahle Leistung bei einem Koppelöffnungsdurchmesser, der der Hälfte der Höhe 13 der Verbindungswand 3 entspricht, beispielsweise um 20 dB geringer als bei Verwendung einer Koppelöffnung 4, deren Querschnitt der gesamten Höhe 13 der Verbindungswand 3 entspricht. Eine Vergrößerung der Sendeleistung ist durch Verringerung der Wanddicke der Verbindungswand 3 möglich. Aus Gründen der mechanischen Stabilität empfiehlt es sich jedoch zu diesem Zwecke lediglich im Bereich der Koppelöffnung 4 eine Bohrung 8 anzubringen, deren Durchmesser größer als der Durchmesser der Koppelöffnung 4 ist, insbesondere der gesamten Höhe 13 der Verbindungswand 3 entspricht.

Die Abmessungen der Resonatoren 1 und 2 werden üblicherweise so gewählt, daß die Wandlänge 14 der Resonatoren in etwa der Wellenlänge $\lambda$ der zu erzeugenden Schwingung entspricht, daß die Breite 15 einer Resonatorenstirnwand im Bereich zwischen $\lambda/2$ und $\lambda$ liegt und daß die Höhe 13 der Resonatoren im Bereich zwischen $\lambda/4$ und $\lambda/2$ liegt. Prinzipiell beträgt die Resonatorlänge $n \cdot \lambda/2$ bei ganzzahligem n. Die Oszillatordiode 9 wird vorzugsweise in der Mitte des ersten Hohlraumoszillators 1 angeordnet.

Zur Vermeidung von störenden Oberwellen, die beispielsweise aufgrund postalischer Vorschriften zu unterdrücken sind, empfiehlt es sich, die Koppelöffnung 4 in einer Entfernung von $(2n + 1)$ $\lambda/4$, insbesondere $\lambda/4$ von der Rückwand 16 des ersten Hohlraumresonators 1 anzuordnen. Der Abstand der Empfängerdiode 10 von der Rückwand des zweiten Hohlraumresonators 2 wird gleich gewählt und sollte also insbesondere ebenfalls $\lambda/4$ betragen. Der zur Feinregulierung der Sendeleistung dienende Metallstift 11 kann in der Mitte des zweiten Hohlraumresonators 2, also z. B. in einer Entfernung von $\lambda/2$ von der Rückwand, angeordnet werden. Mit einer maximal bis zur halben Höhe 13 des Resonators 2 in diesen drehbare Schraube ist die Sendeleistung beispielsweise um 15 bis 20 dB im Vergleich zur Maximalleistung absenkbar. Durch die erfindungsgemäße Ausführung des Dopplerradars ist dessen Leistung ohne den Einsatz von Absorptionsmaterialien einstellbar. Die Empfangsdiode 10 bekommt bei geschlossenem ersten Resonator 1 und mit einer Koppelöffnung 4 versehener Verbindungswand 3 einen erheblich größeren Anteil der Sendeleistung als bei der aus dem Stand der Technik bekannten Anordnung ohne Koppelöffnung 4 und mit offen ausgeführtem ersten Hohlraumresonator. Dadurch wird die Empfindlichkeit des Dopplerradars erheblich verbessert. Ferner ist trotz großer Empfindlichkeit die benötigte Öffnungsfläche des Dopplerradars um die Hälfte verringert, was für zahlreiche Anwendungsfälle von großem Vorteil ist.

Für das erfindungsgemäße Dopplerradar können Hohlraumresonatoren, die im Bereich zwischen 1 und 200 GHz schwingen, verwendet werden, wobei bei sehr hohen Frequenzen vorteilhafterweise anstelle einer Gunn-Diode als Sendediode eine Lawinenlaufzeit-Diode verwendet wird. Aus postalischen Gründen wird ein entsprechendes Dopplerradar in der Regel im Frequenzbereich von 9,3 bis 10,7 GHz betrieben. Es kann zur Erfassung beliebiger bewegter Objekte, beispielsweise Menschen verwendet werden und somit als Einbruchsschutz oder Näherungsschalter benutzt werden. Ein Einsatz als Geschwindigkeitsmesser, beispielsweise zur Geschwindigkeitsmessung von Fahrzeugen ist ebenfalls möglich.

Beispiel :

Abmessungen der Hohlraumresonatoren 1 und 2 :
   Länge 14 : 42,5 mm
   Breite 15 (Frontseite) : 21 mm
   Höhe 13 (Frontseite) : 10,3 mm
   Durchmesser der Koppelöffnung 4 = Wandhöhe 13 : 10,3 mm
   Betriebsfrequenz : 9,35 GHz
   Abgestrahlte Leistung : 25 mW

Bei einem Durchmesser der Koppelöffnung 4, der der halben Höhe 13 der Verbindungswand 3 entspricht, liegt die abgestrahlte Leistung in der Größenordnung von 1 mW.

Als Oszillatordiode kommt eine handelsübliche, mit einer stabilisierten Spannung von 8 Volt versorgte Gunndiode zum Einsatz. Das Signal der als Empfangsdiode 10 verwendeten Schottky-Diode wird mittels eines dreistufigen, rauscharmen Verstärkers um 60 dB verstärkt und anschliessend ausgewertet.

Bei Verwendung eines dielektrischen Einsatzes 12 aus $(Zr_{0,5}TiSn_{0,5})O_4$ mit einer Länge 17 von 2 mm kann die Baulänge 14 des Dopplerradarsgerätes von 42,5 mm auf 36,5 mm bei gleicher Betriebsfrequenz verkürzt werden und gleichzeitig die Temperaturdrift der Betriebsfrequenz erheblich reduziert werden. Bei Wandstärken in der Größenordnung von 3 mm kann die Bohrung 8 so ausgeführt werden, daß die Restwandstärke 0,5 bis 1,5 mm beträgt.

**Ansprüche**

1. Dopplerradargerät, bestehend aus zwei, insbesondere in etwa gleiche Abmessungen aufweisenden, im wesentlichen quaderförmigen Hohlraumresonatoren, die mittels einer beiden Hohlraumresonatoren gemeinsamen Seitenwand (3), die eine Koppelöffnung (4) enthält, miteinander verbunden sind, bei dem der erste Hohlraumresonator (1) abgesehen von der Koppelöffnung geschlossen und der zweite Hohlraumresonator (2) an der zum zu messenden Objekt (5) hin gerichteten Stirnseite geöffnet ausgeführt ist, und bei dem im einen Hohlraumresonator eine Oszillatordiode (9) und im anderen eine die Sende- und Empfangswelle mischende Empfangsdiode (10) angeordnet sind, dadurch gekennzeichnet, daß die Oszillatordiode (9) im ersten Hohlraumresonator (1) und die Empfangsdiode (10) im zweiten Hohlraumresonator (2) angeordnet ist, und daß die Koppelöffnung (4) von der vom zu messenden Objekt (5) weggerichteten Stirnseite (16) des ersten Hohlraumresonators (1) und die Empfangsdiode (10) von der vom zu messenden Objekt (5) weggerichteten Stirnseite des zweiten Hohlraumresonators (2) den gleichen Abstand haben.

2. Dopplerradargerät nach Anspruch 1, dadurch gekennzeichnet, daß die Dicke der Verbindungswand (3) im Bereich der Koppelöffnung (4) vermindert ist.

3. Dopplerradargerät nach Anspruch 2, dadurch gekennzeichnet, daß die Dicke der Verbindungswand (3) im Bereich der Koppelöffnung (4) auf 0,3 bis 1,5 mm verringert ist.

4. Dopplerradargerät nach Anspruch 2 oder 3, dadurch gekennzeichnet, daß im Bereich der Koppelöffnung (4) in der Verbindungswand (3) eine zusätzliche Ausbohrung (8) angeordnet ist, die eine größere Querschnittsfläche als die Koppelöffnung (4) aufweist.

5. Dopplerradargerät nach einem der Ansprüche 1 bis 4, dadurch gekennzeichnet, daß die Koppelöffnung (4), in einer Entfernung von $(2n + 1) \cdot \lambda/4$, insbesondere $\lambda/4$, von der vom zu messenden Objekt (5) weggerichteten Stirnseite (16) des ersten Hohlraumresonators (1) angebracht ist, wobei $\lambda$ die Wellenlänge der im ersten Hohlraumresonator (1) erregten Schwingungen und n eine von 0 an laufende, ganzzahlige Zahl bedeutet.

6. Dopplerradargerät einem der Ansprüche 1 bis 5, dadurch gekennzeichnet, daß der Durchmesser der Koppelöffnung (4), im Bereich zwischen ganzer und halber Höhe der Verbindungswand (3) gewählt ist.

7. Dopplerradargerät nach einem der Ansprüche 1 bis 6, dadurch gekennzeichnet, daß mindestens im ersten Hohlraumresonator (1) ein dielektrischer Einsatz (12) aus einem eine größere Dielektrizitätskonstante als Luft aufweisenden Material angeordnet ist.

8. Dopplerradargerät nach Anspruch 7, dadurch gekennzeichnet, daß der dielektrische Einsatz (12) in etwa quaderförmig ist und eine Rechteckfläche des Quaders in ihren Abmessungen einer Stirnfläche des ersten Hohlraumresonators (1) entspricht.

9. Dopplerradargerät nach Anspruch 7 oder 8, dadurch gekennzeichnet, daß der dielektrische Einsatz (12) an der zum zu messenden Objekt (5) hin gewandten Stirnseite des ersten Hohlraumresonators (1) angeordnet ist.

10. Dopplerradargerät nach einem der Ansprüche 7 bis 9, dadurch gekennzeichnet, daß der dielektrische Einsatz (12) aus Kunststoff, insbesondere Polyvinylchlorid, besteht.

11. Dopplerradargerät nach einem der Ansprüche 7 bis 9, dadurch gekennzeichnet, daß der dielektrische Einsatz (12) aus Keramik besteht.

12. Dopplerradargerät nach einem der Ansprüche 1 bis 11, dadurch gekennzeichnet, daß zur Regulierung der Sendeleistung im zweiten Hohlraumresonator (2) ein insbesondere in der Resonatormitte angebrachter Metallstift (11) vorgesehen ist, dessen in den zweiten Hohlraumresonator (2) eintauchende Länge variabel ist.

13. Dopplerradargerät nach Anspruch 12, dadurch gekennzeichnet, daß der Metallstift (11) von der vom zu messenden Objekt (5) weggerichteten Stirnseite des zweiten Hohlraumresonators (2) in einer Entfernung von $\lambda/2$ angebracht ist, wobei $\lambda$ die Wellenlänge der im ersten Hohlraumresonator (1) erregten Schwingungen bedeutet.

14. Dopplerradargerät nach Anspruch 12 oder 13, dadurch gekennzeichnet, daß die in den zweiten Hohlraumresonator (2) eintauchende Länge des Metallstiftes (11) maximal der halben Höhe (13) des Hohlraumresonators (2) entspricht.

15. Dopplerradargerät nach einem der Ansprüche 1 bis 14, dadurch gekennzeichnet, daß der erste Hohlraumresonator (1) an der zum zu messenden Objekt (5) hin gerichteten Stirnseite mittels eines mit dem Hohlraumresonator kaltverschweißbaren Deckels (6) geschlossen ist.

16. Verwendung des Dopplerradarsgeräts nach einem der Ansprüche 1 bis 15 als Näherungsschalter.

17. Verwendung des Dopplerradarsgeräts nach einem der Ansprüche 1 bis 15 als Geschwindigkeitsmesser.

## Claims

1. Doppler radar apparatus having two essentially parallelepiped cavity resonators, which in particular have approximately the same dimensions, and which are connected to one another by means of a lateral wall (3) which is common to both cavity resonators and has a coupling aperture (4), wherein the first cavity resonator (1) is closed, apart from the coupling aperture, and the second cavity resonator (2) is open at the end face directed towards the object (5) to be measured, and the end face directed towards the object (5) to be measured, and wherein an oscillator diode (9) is arranged in the one cavity resonator and a receiving diode (10), which mixes the transmitting and receiving waves is arranged in the other cavity resonator, characterised in that the oscillator diode (9) is arranged in the first cavity resonator (1) and the receiving diode (10) is arranged in the second cavity resonator (2), and that the coupling aperture (4) has the same distance from the end wall (16) of the first cavity resonator (1) remote from the object (5) to be measured, as the receiving diode (10) from the end wall of the second cavity resonator (2) remote from the object (5) to be measured.

2. Doppler radar apparatus as claimed in Claim 1, characterised in that the thickness of the connecting wall (3) is reduced in the region of the coupling aperture (4).

3. Doppler radar apparatus as claimed in Claim 2, characterised in that the thickness of the connecting wall (3) is reduced to 0.3 to 1.5 mm in the region of the coupling aperture (4).

4. Doppler radar apparatus as claimed in Claim 2 or 3, characterised in that in the region of the coupling aperture (4), an additional bore (8) having a larger cross-section than the coupling aperture (4) is arranged in the connecting wall (3).

5. Doppler radar apparatus as claimed in one of Claims 1 to 4, characterised in that the coupling aperture (4) is arranged at a distance of (2 n + 1) · λ/4, in particular λ/4, from the end wall (16) of the first cavity resonator (1) remote from the object (5) to be measured, where λ signifies the wavelength of the oscillations which are excited in the first cavity resonator (1), and n signifies an integer equal to or greater than 0.

6. Doppler radar apparatus as claimed in one of Claims 1 to 5, characterised in that the diameter of the coupling aperture (4) is in the region between the full height and half the height of the connecting wall (3).

7. Doppler radar apparatus as claimed in one of Claims 1 to 6, characterised in that at least in the first cavity resonator (1) there is arranged a dielectric insert (12) of a material having a larger dielectric constant than air.

8. Doppler radar apparatus as claimed in Claim 7, characterised in that the dielectric insert (12) is approximately parallelepipedal and a rectangular surface of the parallelepiped corresponds to an end wall of the first cavity resonator (1) in its dimensions.

9. Doppler radar apparatus as claimed in Claim 7 or 8, characterised in that the dielectric insert (12) is arranged at the end wall of the first cavity resonator (1) which faces towards the object (5) to be measured.

10. Doppler radar apparatus as claimed in one of Claims 7 to 9, characterised in that the dielectric insert (12) consists of synthetic resin, in particular polyvinylchloride.

11. Doppler radar apparatus as claimed in one of Claims 7 to 9, characterised in that the dielectric insert (12) is a ceramic.

12. Doppler radar apparatus as claimed in one of Claims 1 to 11, characterised in that in order to regulate the transmitting power there is arranged in the second cavity resonator (2) a metal pin (11), whose extension into the second cavity resonator (2) is variable in particular arranged at the resonator centre.

13. Doppler radar apparatus as claimed in Claim 12, characterised in that the metal pin (11) is arranged at a distance of λ/2 from the end wall of the second cavity resonator (2) remote from the object (5) to be measured, where λ signifies the wavelength of the oscillations excited in the first cavity resonator (1).

14. Doppler radar apparatus as claimed in Claim 12 or 13, characterised in that the maximum length of the metal pin (11) which extends into the second cavity resonator (2) is half the height (13) of the cavity resonator (2).

15. Doppler radar apparatus as claimed in one of Claims 1 to 14, characterised in that at the end wall facing the object (5) to be measured, the first cavity resonator (1) is closed by means of a cover (6), which can be cold-welded to the cavity resonator.

16. Use of the Doppler radar apparatus as claimed in one of Claims 1 to 15 as a proximity switch.

17. Use of the Doppler radar apparatus as claimed in one of Claims 1 to 15 as a speedometer.

**Revendications**

1. Appareil radar Doppler, constitué par deux résonateurs à cavité de forme essentiellement parallélépipèdique, possédant notamment approximativement les mêmes dimensions et qui sont reliés entre eux au moyen d'une paroi latérale (3) qui leur est commune et qui contient une ouverture de couplage (4), et dans lequel le premier résonateur à cavité (1) est fermé, en dehors de l'ouverture de couplage, et le second résonateur à cavité (2) est réalisé en étant ouvert sur sa face frontale dirigée vers l'objet à mesurer (5), et dans lequel une diode d'oscillateur (9) est située dans un résonateur à cavité et une diode de réception (10) mélangeant l'onde émise et l'onde reçue est disposée dans l'autre résonateur à cavité, caractérisé par le fait que la diode d'oscillateur (9) est disposée dans le premier résonateur à cavité (1) et que la diode de réception (10) est disposée dans le second résonateur à cavité (2) et que la distance de l'ouverture de couplage (4) par rapport à la face frontale (16), tournée à l'opposé de l'objet à mesurer (5), du premier résonateur à cavité (1) et la distance de la diode de réception (10) par rapport à la face frontale, tournée à l'opposé de l'objet à mesurer (5), du second résonateur à cavité (2), sont égales.

2. Appareil radar Doppler suivant la revendication 1, caractérisé par le fait que l'épaisseur de la paroi de liaison (3) est réduite dans la région de l'ouverture de couplage (4).

3. Appareil radar Doppler suivant la revendication 2, caractérisé par le fait que l'épaisseur de la paroi de liaison (3) est réduite dans la région de l'ouverture de couplage (4) à une valeur comprise entre 0,3 et 1,5 mm.

4. Appareil radar Doppler suivant la revendication 2 ou 3, caractérisé par le fait que dans la région de l'ouverture de couplage (4) ménagée dans la paroi de liaison (3) se trouve disposé un perçage supplémentaire (8), qui possède une surface en coupe transversale plus importante que l'ouverture de couplage (4).

5. Appareil radar Doppler suivant l'une des revendications 1 à 4, caractérisé par le fait que l'ouverture de couplage (4) est disposée à une distance égale à (2 n + 1) · λ/4, notamment égale à λ/4, par rapport à la face frontale (16), située à l'opposé de l'objet à mesurer (5), du premier résonateur à cavité (1), λ représentant la longueur d'onde des vibrations déclenchées dans le premier résonateur à cavité (1) et n étant un nombre entier incluant 0.

6. Appareil radar Doppler suivant l'une des revendications 1 à 5, caractérisé par le fait que le diamètre de l'ouverture de couplage (4) est choisi dans la gamme comprise entre la hauteur totale et la demi-hauteur de la paroi de liaison (3).

7. Appareil radar Doppler suivant l'une des revendications 1 à 6, caractérisé par le fait qu'un insert diélectrique (12) constitué en un matériau possédant une constante diélectrique supérieure à l'air, est disposé au moins dans le premier résonateur à cavité (1).

8. Appareil radar Doppler suivant la revendication 7, caractérisé par le fait que l'insert diélectrique (12) possède une forme approximativement parallélépipédique et qu'une surface rectangulaire du parallélépipède a des dimensions correspondant à celles d'une surface frontale du premier résonateur à cavité (1).

9. Appareil radar Doppler suivant la revendication 7 ou 8, caractérisé par le fait que l'insert diélectrique (12) est disposé sur la face frontale, tournée vers l'objet à mesurer (5), du premier résonateur à cavité (1).

10. Appareil radar Doppler suivant l'une des revendications 7 à 9, caractérisé par le fait que l'insert diélectrique (12) est constitué en une matière plastique, notamment en polychlorure de vinyle.

11. Appareil radar Doppler suivant l'une des revendications 7 à 9, caractérisé par le fait que l'insert diélectrique (12) est constitué par une céramique.

12. Appareil radar Doppler suivant l'une des revendications 1 à 11, caractérisé par le fait que pour le réglage de la puissance d'émission dans le second résonateur à cavité (2) il est prévu une tige métallique (11) disposée notamment au centre du résonateur et dont la longueur pénétrant dans ce résonateur est variable.

13. Appareil radar Doppler suivant la revendication 12, caractérisé par le fait que la tige métallique (11) est montée à une distance égale à λ/2 de la face frontale, tournée à l'opposé de l'objet à mesurer (5), du second résonateur à cavité (2), λ désignant la longueur d'onde des vibrations produites dans le premier résonateur à cavité (1).

14. Appareil radar Doppler suivant la revendication 12 ou 13, caractérisé par le fait que la longueur de pénétration de la tige métallique (11) dans le second résonateur à cavité (2) correspond au maximum à la demi-hauteur (13) de ce résonateur (2).

15. Appareil radar Doppler suivant l'une des revendications 1 à 14, caractérisé par le fait que le premier résonateur à cavité (1) est fermé sur la face frontale, dirigée vers l'objet à mesurer (5), par un couvercle (6) pouvant être soudé à froid sur le résonateur à cavité.

16. Utilisation de l'appareil radar Doppler suivant l'une des revendications 1 à 15 en tant qu'interrupteur de proximité.

17. Utilisation de l'appareil radar Doppler suivant l'une des revendications 1 à 15 en tant que cinémomètre.

FIG 1

FIG 2